(19)

Europäisches
Patentamt
European
Patent Office
Office européen
des brevets

(11) **EP 3 838 698 A2**

(12) **EUROPEAN PATENT APPLICATION**

(43) Date of publication:
**23.06.2021 Bulletin 2021/25**

(51) Int Cl.:
***B60W 30/14*** *(2006.01)*    ***B60W 50/00*** *(2006.01)*

(21) Application number: **21165917.2**

(22) Date of filing: **30.03.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **25.09.2020   CN 202011027594**

(71) Applicant: **Beijing Baidu Netcom
Science and Technology Co., Ltd.
Beijing 100085 (CN)**

(72) Inventor: **Wang, Ruisuo
Beijing, Beijing 100085 (CN)**

(74) Representative: **Nederlandsch Octrooibureau
P.O. Box 29720
2502 LS The Hague (NL)**

(54) **METHOD, APPARATUS, DEVICE, VEHICLE, MEDIUM AND PROGRAM FOR CRUISING
CONTROL**

(57)    The present disclosure discloses a method, apparatus, device, vehicle, and medium of cruising control, and relates to the technical field of automatic driving. A specific implementation is to determine vehicle self-sensing data and driving environment data during cruise of a target driving device; determining, from the historical vehicle self-sensing data associated with the historical driving environment data of the target driving device, target vehicle self-sensing data that matches the vehicle self-sensing data; determining pedal control information for cruising control of the target driving device based on the target driving state data associated with the target vehicle self-sensing data. The cruising process of the embodiment of the present disclosure may be adapted to different driving environments and drivers, which improves the user experience and reduces the data calculation amount during the cruising control process, thereby improves the cruising control efficiency.

Fig. 1

**Description**

TECHNICAL FIELD

The present disclosure relates to the technical field of self-driving, and more particularly, to a method, apparatus, device, vehicle and medium for cruising control.

BACKGROUND

With the continuous development of artificial intelligence technology, an extensive attention has been paid to artificial intelligence in the field of automatic driving, and the artificial intelligence gradually changes people's driving habits and travel modes.

In the self-driving process, a fixed driving strategy is generally set in advance to reduce frequent operation of the user between the brake and the accelerator, thereby relieving fatigue during long-term driving. However, the above-described manner is difficult to adapt to different driving environments, and also difficult to adapt to different drivers, so that the user experience is poor.

SUMMARY

The present disclosure provides a method, apparatus, device, vehicle, and medium of cruising control with high adaptability.

According to one aspect of the present disclosure, there is provided a method of cruising control, including:

determining vehicle self-sensing data and driving environment data during cruise of a target driving device;

determining, from historical vehicle self-sensing data associated with historical driving environment data of the target driving device, target vehicle self-sensing data matching with the vehicle self-sensing data;

determining pedal control information for cruising control of the target driving device based on target driving state data associated with the self-sensing data of the target vehicle.

According to another aspect of the present disclosure, there is further provided an apparatus of cruising control including:

a vehicle self-sensing data determining module for determining vehicle self-sensing data and driving environment data during cruise of the target driving device;

a target vehicle self-sensing data determining module for determining target vehicle self-sensing data matching with the vehicle self-sensing data from historical vehicle self-sensing data associated with the historical driving environment data of the target driving device;

a pedal control information determining module for determining pedal control information based on target driving state data associated with the self-sensing data of the target vehicle, for cruising control of the target driving device.

According to another aspect of the present disclosure, there is also provided an electronic device, including:

at least one processor; and

a memory in communication connection with the at least one processor; where,

the memory stores instructions executable by the at least one processor to enable the at least one processor to perform any of the cruise control methods provided in embodiments of the present disclosure when executed by the at least one processor.

According to another aspect of the present disclosure, there is also provided a vehicle, where the vehicle includes an electronic device provided by an embodiment of the present disclosure.

According to another aspect of the present disclosure, there is also provided a non-transitory computer readable storage medium having stored thereon computer instructions for causing the computer to perform any of the cruise control methods provided in embodiments of the present disclosure.

According to another aspect of the present disclosure, there is also provided a computer program, which when executed by a computer causes the computer to perform any of the cruise control methods provided in embodiments of the present disclosure.

According to the technology of the present disclosure, the adaptability of a driver in a cruise control process is improved.

It is to be understood that the description in this section is not intended to identify key or critical features of the embodiments of the disclosure, nor is it intended to limit the scope of the disclosure. Other features of the present disclosure will become readily apparent from the following description.

BRIEF DESCRIPTION OF THE DRAWINGS

The drawings are intended to provide a better understanding of the present disclosure and are not to be construed as limiting the application. Where:

FIG. 1 is a flowchart of a cruise control method according to an embodiment of the present disclosure;

FIG. 2 is a flowchart of another cruise control method according to an embodiment of the present disclosure;

FIG. 3 is a flowchart of another cruise control method according to an embodiment of the present disclosure;

FIG. 4a is a flowchart of another cruise control method according to an embodiment of the present disclosure;

FIG. 4B is an illustrative structural diagram of a driving environment tree model according to an embodiment of the present disclosure;

FIG. 4C is an illustrative structural diagram of another driving environment tree model according to an embodiment of the present disclosure;

FIG. 5 is an illustrative structural diagram of a cruise control apparatus according to an embodiment of the present disclosure;

FIG. 6 is a block diagram of an electronic device for implementing a cruise control method according to an embodiment of the present disclosure.

DETAILED DESCRIPTION OF EMBODIMENTS

Brief description of the exemplary embodiments of the present disclosure are described below in connection with the accompanying drawings, in which various details of the embodiments of the present disclosure are included to facilitate understanding, and are to be considered as exemplary only. Accordingly, one of ordinary skill in the art will understand that various changes and modifications may be made to the embodiments described herein without departing from the scope and spirit of the present disclosure. Also, for clarity and conciseness, descriptions of well-known functions and structures are omitted from the following description.

The cruise control method and the cruise control apparatus provided in the embodiments of the present disclosure are applicable to a case where a driving device does not need to be controlled by a driver, so that automatic cruise control of the driving device is realized. Each cruise control method may be performed by a cruise control apparatus, which may be implemented in software and/or hardware, and is specifically deployed in an electronic device which may be built-in within an automatic driving appliance, such as an autopilot vehicle.

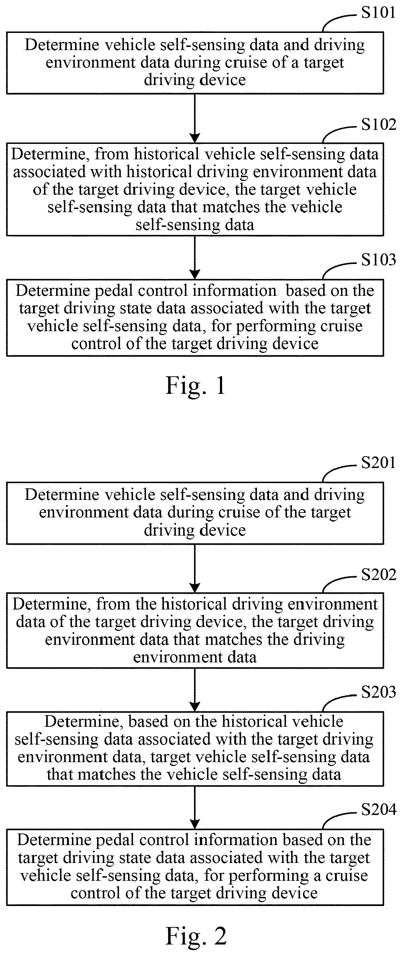

FIG. 1 is a flowchart of a cruise control method provided by an embodiment of the present disclosure. The cruise control method includes following steps.

S101 includes determining vehicle self-sensing data and driving environment data during cruise of a target driving device.

The cruising process of the driving device may be understood as a process in which the driving device may be driven in accordance with a certain driving state without needing the driver to manually control the control pedal such as an accelerator or a brake or the like. The driving device may be a vehicle or a ship or the like. The target driving device may be understood as a driving device performing a cruise control.

The vehicle's self-sensing data is used to characterize the current operating parameters of the target driving device, and may be understood as original data acquired by the sensing module in the target driving device or other data converted from the acquired original data. The sensing module may include a lane identification module, an obstacle sensing module, an obstacle fusing module, an obstacle tracking module, and the like. Accordingly, the vehicle's self-sensing data may include, but is not limited to, data such as transitory speed, transitory acceleration speed, and throttle pressure.

The driving environment data is used to characterize the current driving environment information of the target driving device, and may be obtained by performing data processing on the original data acquired by the sensing module or the vehicle self-sensing data. For example, the driving environment data may include, but is not limited to, information such as a speed of the following driving device, a distance from the following driving device, a type of the following driving device, and a relative position with respect to a travel restriction line. For example, when the driving device is a vehicle, the travel restriction line may be a lane or a guardrail, or the like.

Optionally, at least one of the original data, the vehicle's self-sending data, and the driving environment data may be pre-stored in the target driving device locally, other storage devices associated with the target driving device, or the cloud, and the acquisition of the corresponding data may be performed as needed. Of course, the original data may also be acquired in real time from the sensing module of the target driving device.

When the original data is acquired, the original data may be processed based on the sensing fields to obtain a field value of respective sensing field, thereby obtaining the sensing data of the vehicle itself; It is also possible to process the original data and/or the vehicle self-sensing data based on the driving environment field to obtain a field value of respective driving environment field, thereby obtaining driving environment data.

S102 includes determining, from historical vehicle self-sensing data associated with historical driving environment data of the target driving device, the target vehicle self-sensing data that matches with the vehicle self-sensing data.

The historical vehicle self-sensing data associated with the historical driving environment data may be understood as the historical vehicle self-sensing data corresponding to the same time stamp information as the historical driving environment data.

Optionally, the similarity between the self-sensing data of respective historical vehicle and the self-sensing data of the vehicle may be determined, and the historical vehicle self-sensing data with higher similarity is selected as the target vehicle self-sensing data.

It should be noted that when the target driving device is used for a longer time, there will be a large amount of historical vehicle self-sensing data. Therefore, it is necessary to occupy a large amount of memory resources to determine the similarity between the historical vehicle self-sensing data and the vehicle self-sensing data one by one. In order to reduce the amount of data computation when performing the target vehicle's self-sensing data, optionally, the historical vehicle self-sensing data may be classified in advance, and the similarity between each category of the historical vehicle self-sensing data and the vehicle self-sensing data is determined respectively, and the historical self-sensing data of the vehicle with higher similarity is selected as the target vehicle self-sensing data.

In an alternative embodiment, the historical vehicle self-sensing data may be clustered based on at least one sensing field to obtain a sensing clustering result, thereby achieving classification of the historical vehicle self-sensing data. In order to facilitate searching for the historical vehicle self-sensing data of different categories and improve the inquiry efficiency, the sensing clustering results may be stored in a tree structure.

S103 includes determining, based on the target driving state data associated with the target vehicle sensing data, pedal control information for performing cruise control of the target driving device.

The driving state information is used to characterize a state parameter or a desired state parameter of the driving device during driving. For example, the driving state information may include, but is not limited to, information such as acceleration speed, deceleration speed, and transitory speed.

The pedal control information is used to characterize the opening degree information of the control pedal, and may include, for example, but is not limited to, information such as an accelerator pedal opening degree and a brake pedal opening degree.

Optionally, determining candidate driving state data associated with the target vehicle self-sensing data based on an association between the historical vehicle self-sensing data and the historical driving state data; determining target driving state data based on the candidate driving state data; determining pedal control information based on the target driving state data; where the cruise control is performed on the target driving device based on the pedal control information.

It should be noted that since the candidate driving state data may be more than one group, it is necessary to further determine the target driving state data based on the candidate driving state data. Optionally, one of the candidate driving state data may be randomly selected as the target driving state data; selecting one of the candidate driving state data close to the time stamp information of the vehicle self-sensing data as the target driving state data; Alternatively, the target driving state data is obtained from the weighted average of at least two candidate driving state data. The weighting weights may be determined by the number of candidate driving state data and/or the length of time from the time stamp information of the vehicle self-sending data. Generally, the shorter the length of time, the higher the weight; The longer the length of time, the lower the weight.

In an alternative embodiment, the association of the historical vehicle self-sensing data with the historical driving state data may be constructed directly from the time stamp information.

However, when the target driving device is used for a long time, there will be a large amount of historical vehicle self-sensing data and historical driving state data. the historical vehicle self-sensing data and historical driving state data may be classified and the association relationships may be constructed based on the classification result, so as to relieve the problem that the amount of data calculation is large when determining the target driving state data, which is caused by too many association relationships constructed based on the time stamp information.

In another alternative embodiment, the association relationship between the historical vehicle self-sensing data and the historical driving state data may be constructed by clustering the historical vehicle self-sensing data based on at least one sensing field to obtain a sensing clustering result; clustering the historical driving state data based on at least one driving state field to obtain a driving state clustering result; establishing an association relationship between the sensing clustering result and the driving state clustering result based on the time stamp information of the historical vehicle self-sensing data and the historical driving state data.

For example, the respective historical vehicle self-sensing data may be clustered directly based on the distance between the respective historical vehicle self-sensing data to obtain a sensing clustering result; alternatively, respective historical driving state data is clustered directly based on the distance between the historical driving state data to obtain a driving state clustering result.

As an example, it is also possible to classify the respective historical vehicle self-sensing data for a range of value of a field value of a different sensing fields to obtain a sensing clustering result; alternatively, respective historical driving state data is classified for a different driving state field to obtain a driving state clustering result.

The sensing clustering result and/or the driving state clustering result may be in the same or different data storage structure to facilitate a matching search of the target driving state data in the target driving device locally or in other storage devices or clouds associated with the target driving device.

In order to improve the determination efficiency of the target driving state data, a storage address corresponding to a driving state clustering result may be stored in association with each sensing category.

In order to facilitate the search of the historical driving state data of different categories and improve the inquiry efficiency, the sensing clustering result and/or the driving state clustering result may be stored in a tree structure.

According to the embodiment of the present disclosure, vehicle self-sensing data and driving environment data are determined during cruising of a target driving device; determining, from the historical vehicle self-sensing data associated with the historical driving environment data of the target driving device, target vehicle self-sensing data that matches with the vehicle self-sensing data; determining pedal control information for cruising control of the target driving device based on the target driving state data associated with the target vehicle self-sensing data. According to the above technical scheme, by means of association and matching of historical driving environment data, the target vehicle self-sensing data is determined, so that the pedal control information is determined based on the target driving state data associated with the target vehicle self-sensing data, and further cruise control of the target driving device is realized, so that the cruise control process may be adapted to different driving environments and drivers, and user experience is improved. In addition, the auxiliary determination of the pedal control information is performed by means of historical data association determination, so that the amount of data calculation in the cruise control process may be reduced, thereby improving the cruise control efficiency.

FIG. 2 is a flowchart of another cruise control method according to an embodiment of the present disclosure. The method is optimized and improved on the basis of the above-mentioned technical solutions.

Further, the operation of "determining, from the historical vehicle self-sensing data associated with the historical driving environment data of the target driving device, target vehicle self-sensing data matching with the vehicle self-sensing data" is refined to "determining, from the historical driving environment data of target driving device, target driving environment data matching with the driving environment data; determining the target vehicle self-sensing data matching with the vehicle self-sensing data based on the historical vehicle self-sensing data associated with the target driving environment data," to improve the determining mechanism of the target vehicle self-sensing data.

A cruise control method as shown in FIG. 2 includes following steps.

S201 includes determining vehicle self-sensing data and driving environment data during cruise of the target driving device.

S202 includes determining from the historical driving environment data of the target driving device, the target driving environment data that matches the driving environment data.

Illustratively, the similarity between the driving environment data and respective historical driving environment data may be determined; a historical driving environment data with a higher similarity is selected as the target driving environment data.

It should be noted that when the target driving device is used for a longer time, there will be a large amount of historical driving environment data. Therefore, the one by one determination of the similarity between the historical driving environment data and the driving environment data is necessarily occupy a large amount of memory resources. In order to reduce the amount of data calculation when performing the target driving environment data, optionally, the historical driving environment data may be classified in advance, the similarity between the historical driving environment data of each category and the driving environment data is determined respectively, and the historical driving environment data with a higher similarity is selected as the target driving environment data.

In an alternative embodiment, the historical driving environment data may be clustered based on at least one driving environment field to obtain a driving environment clustering result, thereby achieving classification of the historical driving environment data.

Illustratively, the distance between the respective historical driving environment data may be directly clustered based on the distance between the respective historical driving environment data to obtain a sensing clustering result.

Illustratively, respective historical driving environment data may be classified for a range of value of a field value of a different driving environment field to obtain a driving environment clustering result.

The driving environment clustering results may be stored in the target driving device locally, in other storage devices or in the cloud associated with the target driving device, to perform a search and match for the target driving environment data.

In order to facilitate the searching of historical driving environment data of different categories and improve the inquiry efficiency, the driving environment clustering results may be stored in a tree structure.

S203 includes determining, based on the historical vehicle self-sensing data associated with the target driving environment data, target vehicle self-sensing data that matches the vehicle self-sensing data.

Illustratively, determine the associated candidate vehicle self-sensing data when the historical driving environment data is the target driving environment data based on an association relationship between the historical driving environment data and the historical vehicle self-sensing data; determining the target vehicle self-sensing data based on the candidate vehicle self-sensing data, for an auxiliary determination when performing the target driving state data.

It should be noted that since the candidate vehicle self-sensing data may be more than one group, further determination of the target vehicle self-sensing data needs to be performed based on the candidate vehicle self-sensing data. Optionally, one of the candidate vehicle self-sensing data may be randomly selected as the target vehicle self-sensing data; selecting one of the candidate vehicle self-sensing data, which is close to the time stamp information of the target driving environment data, as the target vehicle self-sensing data; alternatively, the target vehicle self-sensing data is obtained based on the weighted average of the at least two candidate vehicle self-sensing data. The weighting weights may be determined by the number of sensing data of the candidate vehicle itself and/or the length of time from the time stamp information of the target driving environment data. Generally, the shorter the length of time, the higher the weight; The longer the length of time, the lower the weight.

In an alternative embodiment, the association relationship between the historical driving environment data and the historical vehicle self-sensing data may be constructed directly from the time stamp information.

However, when the target driving device is used for a longer time, there will be a large amount of historical driving environment data and historical vehicle self-sensing data. The historical driving environment data and the historical vehicle self-sensing data may be classified, and the association relationship is constructed based on the classification result, so as to relieve the problem that the data calculation amount is too large when determining the target vehicle self-sensing data caused by too many association relationships constructed based on the time stamp information.

In another alternative embodiment, the association relationship between the historical driving environment data and the historical vehicle self-sensing data may be constructed by clustering the historical driving environment data based on at least one driving environment field to obtain a driving environment clustering result; clustering the historical vehicle self-sensing data based on at least one sensing field to obtain a sensing clustering result; establishing an association relationship between the driving environment clustering result and the respective sensing clustering result based on the time stamp information of the historical driving environment data and the sensing data of the historical vehicle itself.

It should be noted that by first clustering the driving environment data and the vehicle self-sensing data, and then constructing the association relationship based on the clustering result, it is possible to reduce the time consumed for constructing the association relationship and reduce the number of categories of the sensing clustering results.

In still another alternative embodiment, the association relationship between the historical driving environment data and the historical vehicle self-sensing data may be constructed by clustering the historical driving environment data based on at least one driving environment field to obtain a driving environment clustering result; based on the at least one sensing field, clustering the historical vehicle self-sensing data of each driving environment clustering category respectively to obtain a sensing clustering result; and establishing an association relationship between the driving environment clustering result and the sensing clustering result.

It should be noted that by clustering the driving environment data respectively and then re-clustering the historical vehicle self-sensing data associated with the timestamp information based on the clustering result, the clustering of the historical vehicle self-sensing data for a single category of driving environment data, i.e., in the same driving scene, is realized. In this way, the historical vehicle self-sensing data may be finer-grained clustered in a single category of driving environment data, thereby making the clustering result more accurate, laying a foundation for improving the accuracy of the subsequent pedal control information determination result.

Illustratively, respective historical driving environment data may be clustered directly based on the distance between the historical driving environment data to obtain a driving environment clustering result; alternatively, the historical vehicle self-sensing data are clustered directly based on the distance between the historical vehicle self-sensing data to obtain a sensing clustering result.

Illustratively, respective historical driving environment data may be classified based on a value range of a field value of a different driving environment field to obtain a driving environment clustering result; alternatively, for a range of value of a field value of a different sensing field, the respective historical vehicle self-sensing data is classified to obtain a sensing clustering result.

The driving environment clustering result and/or the sensing clustering result may be in the same or different data storage structure to facilitate the search and matching of the target vehicle self-sensing data in the target driving device locally or other storage device or cloud associated with the target driving device.

In order to improve the determination efficiency of the target vehicle self-sensing data, the storage addresses of a corresponding sensing clustering result may be stored in association with each driving environment category.

In order to facilitate the searching of different types of historical vehicle self-sensing data and improve the inquiry efficiency, a tree structure may be used to store the driving environment clustering result and/or the sensing clustering result.

S204 includes determining pedal control information based on the target driving state data associated with the target vehicle self-sensing data, for performing a cruise control of the target driving device.

According to the embodiment of the present disclosure, the operation of determining the target vehicle self-sensing data is refined into the operation of determining, from the historical driving environment data of the target driving device, the target driving environment data matching with the driving environment data, and then determining target vehicle self-sensing data that matches the vehicle self-sensing data based on the historical vehicle self-sensing data associated with the target driving environment data. With the above technical solution, by performing the determination of the target driving environment data and the target vehicle self-sensing data sequentially in a batch matching manner, lays a foundation for the subsequent determination of the pedal control information and improves the determination mechanism of the target vehicle self-sensing data. At the same time, by means of batch matching, there is no need to perform a matching determination for all the historical vehicle self-sensing data, thereby reducing the amount of data calculation in the process of determining the target vehicle self-sensing data, thus improving the determination efficiency of the target vehicle self-sensing data, and laying a foundation for improving the accuracy of the result of determining the pedal control information.

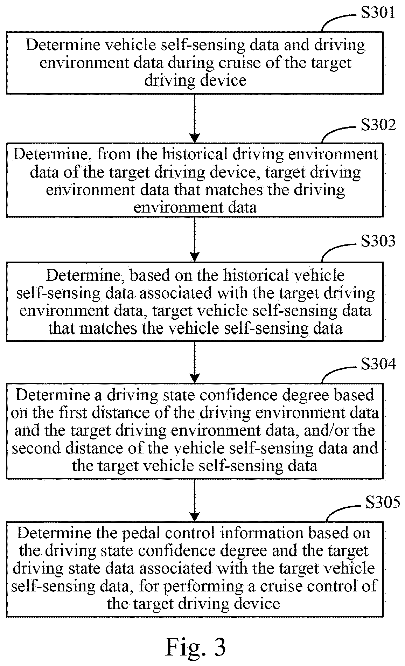

FIG. 3 is a flowchart of another cruise control method according to an embodiment of the present disclosure. The method is optimized and improved on the basis of the above-mentioned technical solutions.

Further, the operation of "determining pedal control information based on target driving state data associated with the target vehicle self-sensing data" is refined to "determining driving state confidence degree based on a first distance of the driving environment data and the target driving environment data, and/or a second distance of the vehicle self-sensing data and the target vehicle self-sensing data; determining the pedal control information based on the driving state confidence degree and the target driving state data associated with the target vehicle self-sensing data," to improve the determining mechanism of the pedal control information.

A cruise control method as shown in FIG. 3 includes:

S301 includes determining vehicle self-sensing data and driving environment data during cruise of the target driving device.

S302 includes determining, from the historical driving environment data of the target driving device, target driving environment data that matches the driving environment data.

S303 includes determining, based on the historical vehicle self-sensing data associated with the target driving environment data, target vehicle self-sensing data that matches the vehicle self-sensing data.

S304 includes determining a driving state confidence degree based on the first distance of the driving environment data and the target driving environment data, and/or the second distance of the vehicle self-sensing data and the target vehicle self-sensing data.

The driving state confidence degree is used to characterize the degree of credibility between the target driving state data associated with the target vehicle self-sensing data, and the vehicle self-sensing data and the driving environment data. That is, the degree of fitness between the determined target driving state data and the current driving scene and the current driver.

Exemplarily, a first distance between the driving environment data and the target driving environment data is determined based on a field value of respective driving environment field in the driving environment data and the target driving environment data; determining a second distance between the vehicle self-sensing data and the target vehicle self-sensing data based on a field value of respective sensing field in the vehicle self-sensing data and the target vehicle self-sensing data; determining a driving state confidence degree based on the first distance and/or the second distance.

The first distance and/or the second distance may be an Euclidean distance or a Mahalanobis distance, etc.

Optionally, the determination of the driving state confidence degree based on the first distance and/or the second distance may be determining the driving state confidence degree based on the first distance and/or the second distance using a pre-constructed confidence degree function. The first distance and/or the second distance are arguments of the confidence degree function. The confidence degree function is a decreasing function, i.e., decreases as the arguments increase.

Illustratively, a weighted average of the reciprocal of the first distance and the reciprocal of the second distance may be used as the driving state confidence degree. The weighting weights may be determined by the technician according to needs or their experienced values.

S305 includes determining the pedal control information based on the driving state confidence degree and the target driving state data associated with the target vehicle self-sensing data, for performing a cruise control of the target driving device.

Optionally, if the driving state confidence degree is greater than a set confidence degree threshold, it indicates that the target driving state data associated with the target vehicle self-sensing data has a high degree of fitness with the current driving scene and the current driver. Therefore, the target driving state data may be converted into pedal control information directly, and the cruise control of the target driving device may be performed based on the pedal control information. Or alternatively, determining a final driving state data based on the target driving state data and a standard driving state data; The final driving state data is converted into pedal control information, and the cruise control of the target driving device is performed based on the pedal control information.

Setting the confidence degree threshold may be determined by a technician based on needs or experienced value, or determined repeatedly by a number of experiments. The standard driving state data may be determined by the developer or maintenance personnel of the target driving device based on needs or experienced value.

Illustratively, the determination of final driving state data based on the target driving state data and the standard driving state data may be, by using the driving state confidence degree as a weighted weight of the target driving state data, determining a weighted weight of the standard driving state data based on the driving state confidence degree, determining the weighted sum of the target driving state data and the standard driving state data with each weighted weight, and taking the determined sum value as the final driving state data.

Optionally, if the driving state confidence degree is not greater than the set confidence degree threshold, it indicates that the target driving state data associated with the target vehicle self-sensing data has a low degree of fitness with the current driving scene and the current driver. Therefore, the standard driving state data may be converted into pedal control information directly, and the cruise control of the target driving device may be performed based on the pedal control information.

On the basis of the above-mentioned technical solutions, the target driving state data associated with the target vehicle self-sensing data may be subject to a certain risk due to a bad driving habit of the driver himself, which brings a certain potential safety problem to the cruise control process of the target driving device. In order to avoid the above-mentioned situation, the target driving state confidence degree with a certain potential safety problem may be adjusted after determining the driving state confidence degree, and before determining the pedal control information based on the driving state confidence degree and the target driving state data associated with the target vehicle self-sensing data.

For example, if there is a field value of at least one driving state field in the target driving state data belongs to a dangerous state data, the driving state confidence degree is adjusted. The dangerous state data may be set to the same or different dangerous threshold range according to a different driving state field; The specific value of respective threshold range may be set by the a technician based on needs or experienced value, or determined by a number of experiments repeatedly.

Specifically, if there is a field value of at least one driving state field belongs to the dangerous threshold range, it is determined that the group of target driving state data belongs to the dangerous state data, and accordingly, the driving state confidence degree of the target driving state data is adjusted to a smaller value.

The embodiment of the present disclosure refines the operation of determining the pedal control information into determining a driving state confidence degree based on a first distance between driving environment data and target driving environment data, and/or a second distance between vehicle self-sensing data and target vehicle self-sensing data; determining pedal control information based on the driving state confidence degree and the target driving state data associated with the target vehicle self-sensing data. According to the above technical scheme, the degree of fitness between the target driving state data and the current driving scene and the driver is determined by introducing the driving state confidence degree, thereby further improving the scene matching degree and the user matching degree of the finally determined pedal control information, and establish a foundation for improving the user experience degree.

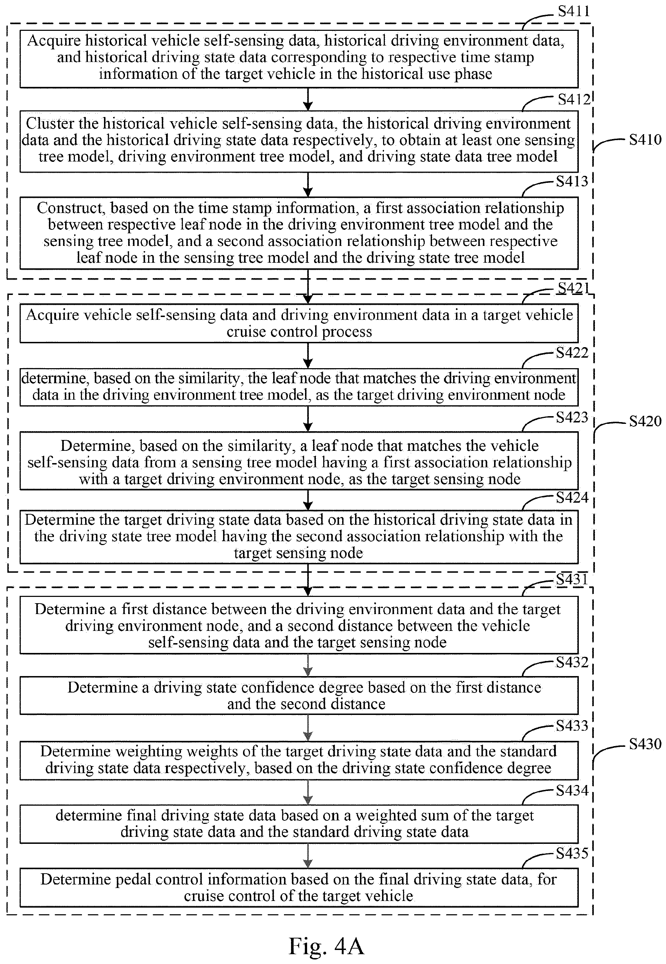

FIG. 4a is a flowchart of another cruise control method according to an embodiment of the present disclosure. This embodiment provides a preferred embodiment based on the above-described technical solutions.

A cruise control method as shown in FIG. 4a is applied to a vehicle and includes following steps.

S410 includes a tree model construction stage.

S420 includes target driving state data determination stage.

S430 includes a vehicle cruise control phase.

Illustratively, a tree model construction stage includes:

S411 includes acquiring historical vehicle self-sensing data, historical driving environment data, and historical driving state data corresponding to respective time stamp information of the target vehicle in the historical use phase.

The vehicle self-sensing data may be at least one of original data acquired by using the lane identification module, the obstacle sensing module, the obstacle fusing module, and the obstacle tracking module, and data such as an transitory vehicle speed, an transitory acceleration speed, and an accelerator pressure or the like obtained after data conversion.

The driving environment data may be at least one of a vehicle's speed, a following vehicle speed, a relative position corresponding to the distance from the following vehicle, the following vehicle type and a driving line obtained after processing the vehicle self-sensing data of each recording period. The recording period may be determined by the acquisition frequency of each sensor, or by a technician as needed or the experienced value.

The driving state data may include, but is not limited to, information such as acceleration speed, deceleration speed, and transitory speed when the vehicle is driving.

S412 includes clustering the historical vehicle self-sensing data, the historical driving environment data and the historical driving state data respectively, to obtain at least one of sensing tree model, driving environment tree model, and driving state data tree model.

Illustratively, respective historical driving environment data may be clustered based on a field attribute of at least one driving environment field to obtain a corresponding driving environment tree model. The driving environment field may include, but is not limited to, information such as a vehicle's own speed, a front vehicle's speed, a vehicle's own acceleration speed, and a front vehicle's acceleration speed.

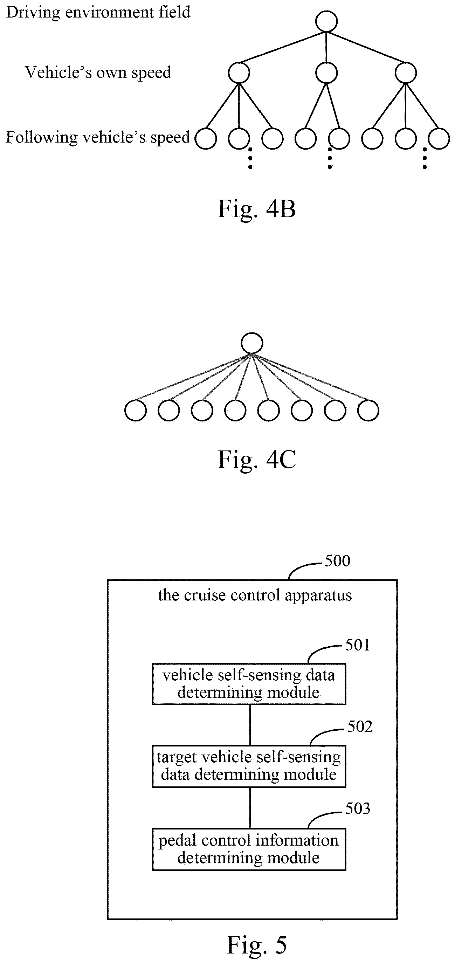

Referring to the illustrative structural schematic of the driving environment tree model shown in FIG. 4B and FIG. 4C. The driving environment tree model shown in FIG. 4B is obtained by hierarchical clustering of historical driving environment data based on a field attribute of each driving environment field. The driving environment tree model shown in FIG. 4C is obtained by clustering historical driving environment data based on a field attribute of all driving environment fields.

Illustratively, respective historical vehicle self-sensing data may be clustered based on a field attribute of at least one sensing field to obtain a corresponding sensing tree model.

Optionally, the historical vehicle self-sensing data may be hierarchically clustered based on a field attribute of each sensing field to obtain a sensing tree model; Alternatively, the vehicle self-sensing data is clustered based on a field attribute of all the sensing fields to obtain a sensing tree model.

It should be noted that, in order to provide a foundation for improving the matching degree and accuracy between the vehicle cruise control result and the driving environment and the driver, one sensing tree model may be constructed for the historical vehicle self-sensing data with the same time stamp of each leaf node in the driving environment tree model respectively when constructing the sensing tree model, so that the sensing tree model may be divided and constructed with finer granularity.

Illustratively, respective historical driving state data may be clustered based on a field attribute of at least one driving state field to obtain a corresponding driving state tree model.

Optionally, the historical driving state data may be hierarchically clustered based on a field attribute of each driving state field to obtain a driving state tree model; or alternatively, the driving state data is clustered based on a field attribute of all driving state fields to obtain a driving state tree model.

In order to provide a foundation for improving the matching degree and accuracy between the vehicle cruise control result and the driving environment and the driver, one driving state tree model may be constructed for the historical driving state data with the same time stamp of each leaf node in the sensing tree model respectively, so that the driving tree model may be divided and constructed with finer granularity.

S413 includes constructing, based on the time stamp information, a first association relationship between respective leaf node in the driving environment tree model and the sensing tree model, and a second association relationship between respective leaf node in the sensing tree model and the driving state tree model.

To facilitate data searching, a first association relationship between respective leaf node and a corresponding sensing tree model may also be constructed in the leaf node of the driving environment tree model based on the time stamp information. For example, an address of the corresponding sensing tree model may be stored in the leaf node.

To facilitate data searching, a second association relationship between respective leaf node and a corresponding historical driving state tree model is constructed in a leaf node of each sensing tree model based on time stamp information. For example, the addresses of the corresponding historical driving state tree model may be stored in a leaf node.

Illustratively, a target driving state data determination stage includes following steps.

S421 includes acquiring vehicle self-sensing data and driving environment data in a target vehicle cruise control process.

S422 includes determining, based on the similarity, the leaf node that matches the driving environment data in the driving environment tree model, as the target driving environment node.

S423 includes determining, based on the similarity, a leaf node that matches the vehicle self-sensing data from a sensing tree model having a first association relationship with a target driving environment node, as the target sensing node.

S424 includes determining the target driving state data based on the historical driving state data in the driving state tree model having the second association relationship with the target sensing node.

Illustratively, a vehicle cruise control phase includes following steps.

S431 includes determining a first distance between the driving environment data and the target driving environment node, and a second distance between the vehicle self-sensing data and the target sensing node.

S432 includes determining a driving state confidence degree based on the first distance and the second distance.

S433 includes determining weighting weights of the target driving state data and the standard driving state data respectively, based on the driving state confidence degree.

S434 includes determining final driving state data based on a weighted sum of the target driving state data and the standard driving state data.

Illustratively, the determination of the final driving state data may be performed according to the following formula:

$$R = w_1 * r_1 + (1-w_1) * r_2;$$

where r is final driving state data, w1 is driving state confidence degree, $r_1$ is target driving state data, and $r_2$ is standard driving state data.

S435 includes determining pedal control information based on the final driving state data, for cruise control of the target vehicle.

The pedal control information may include, but is not limited to, information such as an accelerator pedal opening degree and a brake pedal opening degree.

FIG. 5 is a block diagram of a cruise control apparatus provided by an embodiment of the present disclosure, the cruise control apparatus 500 includes a vehicle self-sensing data determination module 501, a target vehicle self-sensing data determination module 502, and a pedal control information determination module 503.

A vehicle self-sensing data determining module 501 is used for determining vehicle self-sensing data and driving environment data during cruise of a target driving device.

A target vehicle self-sensing data determining module 502 is used for determining target vehicle self-sensing data matching the vehicle self-sensing data from the historical vehicle self-sensing data associated with the historical driving environment data of the target driving device.

The pedal control information determining module 503 is used for determining the pedal control information based on the target driving state data associated with the target vehicle self-sensing data, for performing cruise control of the target driving device.

According to an embodiment of the present disclosure, the vehicle self-sensing data and driving environment data of the target driving device during cruising are determined by the vehicle self-sensing data determining module; determining, by a target vehicle self-sensing data determination module, target vehicle self-sensing data matching the vehicle self-sensing data from the historical vehicle self-sensing data associated with the historical driving environment data of the target driving device; the pedal control information is determined by the pedal control information determining module based on the target driving state data associated with the target vehicle self-sensing data, for cruising control of the target driving device. According to the above technical scheme, by means of association and matching of historical driving environment data, the target vehicle self-sensing data is determined, so that the pedal control information is determined based on the target driving state data associated with the target vehicle self-sensing data, and further cruise control of the target driving device is realized, so that the cruise control process may be adapted to different driving environments and drivers, and user experience is improved. In addition, the auxiliary determination of the pedal control information is performed by means of historical data association determination, so that the amount of data calculation in the cruise control process may be reduced, thereby improving the cruise control efficiency.

Further, the target vehicle self-sensing data determining module 502 includes:

a target driving environment data matching unit for determining target driving environment data matching the driving environment data from the historical driving environment data of the target driving device; a target vehicle self-sensing data matching unit for determining target vehicle self-sensing data matching the vehicle self-sensing data from the historical vehicle self-sensing data associated with the target driving environment data.

Further, the apparatus further includes an environment sensing association relationship construction module for constructing an association relationship between historical driving environment data and historical vehicle self-sensing data;

the environment sensing association relationship construction module, including:

a first driving environment clustering unit, for clustering historical driving environment data based on at least one driving environment field to obtain a driving environment clustering result;

a first sensing clustering unit, for clustering the historical vehicle self-sensing data based on at least one sensing field to obtain a sensing clustering result;

a first environment sensing association relationship construction unit, for establishing an association relationship between a driving environment clustering result and respective sensing clustering result based on the time stamp information of the historical vehicle self-sensing data and the historical driving environment data.

Further, the apparatus further includes an environment sensing association relationship construction module for constructing an association relationship between historical driving environment data and historical vehicle self-sensing data;

the environment sensing association relationship construction module, including:

A second driving environment clustering unit for clustering historical driving environment data based on at least one driving environment field to obtain a driving environment clustering result;

a second sensing clustering unit for clustering the historical vehicle self-sensing data of respective driving environment clustering category respectively, based on at least one sensing field to obtain a sensing clustering result;

a second environment sensing association relationship construction unit for establishing an association relationship between the driving environment clustering result and the sensing clustering result.

Further, the apparatus further includes a sensing state association relationship construction module for constructing an association relationship between the historical vehicle self-sensing data and the historical driving state data;

the sensing state association relationship construction module, including:

a sensing clustering unit, for clustering the historical vehicle self-sensing data based on at least one sensing field to obtain a sensing clustering result;

a driving state clustering unit, for clustering historical driving state data based on at least one driving state field to obtain a driving state clustering result;

a sensing state association relationship construction unit, for establishing an association relationship between the sensing clustering result and the driving state clustering result based on the time stamp information of the historical driving state data and the historical vehicle self-sensing data.

Further, at least one of a sensing clustering result, a driving environment clustering result, and a driving state clustering result is stored in a tree structure.

Further, the pedal control information determining module 503, including:

a confidence degree determining unit for determining a driving state confidence degree based on a first distance of the driving environment data and the target driving environment data, and/or a second distance of the vehicle self-sensing data and the target vehicle self-sensing data;

a pedal control information determining unit for determining pedal control information based on the driving state confidence degree and the target driving state data associated with the target sensing state data.

Further, the pedal control information determining module 503 further includes:

a confidence degree adjusting unit for adjusting the driving state confidence degree if a field value of at least one driving field in the target driving state data belongs to a dangerous state data, after the determination of the driving state confidence degree, and before the determination of the pedal control information based on the driving state confidence degree and the target driving state data associated with the target vehicle self-sensing data.

The cruise control apparatus may execute the cruise control method according to any one of the embodiments of the present disclosure, and has a corresponding functional module for executing the cruise control method and advantageous effects.

According to an embodiment of the present disclosure, the present disclosure also provides an electronic device and a readable storage medium.

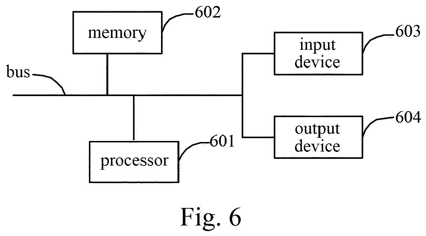

FIG. 6 is a block diagram of an electronic device for implementing the cruise control method according to the embodiment of the present disclosure. Electronic devices are intended to represent various forms of digital computers, such as laptop computers, desktop computers, worktables, personal digital assistants, servers, blade servers, mainframe computers, and other suitable computers. Electronic devices may also represent various forms of mobile devices, such as in-vehicle devices, personal digital processing, cellular telephones, smart phones, wearable devices, and other similar computing devices. The components shown herein, their connections and relationships, and their functions are by way of example only and are not intended to limit the implementation of the present disclosure as described and/or claimed herein.

As shown in FIG. 6, the electronic device includes one or more processor 601, a memory 602, and an interface for connecting components, including a high speed interface and a low speed interface. The various components are interconnected by different buses and may be mounted on a common mainboard or other mounting manners. The processor may process instructions executed within the electronic device, including instructions stored in or on a memory to display graphical information of the GUI on an external input/output device, such as a display device coupled to an interface. In other embodiments, multiple processors and/or multiple buses may be used with multiple memories and multiple memories, if desired. Similarly, a plurality of electronic devices may be connected, each providing a portion of the necessary operations (e.g., as a server array, a set of blade servers, or a multiprocessor system). A processor 601 is exemplified in FIG. 6.

The memory 602 is a non-transitory computer readable storage medium provided by the present disclosure. Where the memory stores instructions executable by the at least one processor to enable the at least one processor to perform the cruise control method provided in the present disclosure. The non-transitory computer-readable storage medium of the present disclosure stores computer instructions for causing a computer to perform the cruise control method provided in the present disclosure.

The memory 602, as a non-transitory computer-readable storage medium, may be used to store a non-transitory software program, a non-transitory computer-executable program, and a module, such as a program instruction/module corresponding to the cruise control method in the embodiment of the present disclosure (for example, the vehicle self-sensing data determining module 501, the target vehicle self-sensing data determining module 502, and the pedal control information determining module 503 as shown in FIG. 5). The processor 601 executes various functional applications and data processing of the server by running non-transitory software programs, instructions and modules stored in the memory 602, that is, implements the cruise control method in the above-described method embodiment.

The memory 602 may include a storage program area and a storage data area, where the storage program area may store an operating system, an application program required for at least one function; the storage data area may store data or the like created by the use of the electronic device implementing the cruise control method. In addition, memory 602 may include high speed random access memory, and may also include non-transitory memory, such as at least one magnetic disk storage device, flash memory device, or other non-transitory solid state storage device. In some embodiments, memory 602 may optionally include remotely deployed memory relative to processor 601, which may be connected via a network to an electronic device implementing a cruise control method. Examples of such networks include, but are not limited to, the Internet, enterprise intranets, local area networks, mobile communication networks, and combinations thereof.

The electronic apparatus implementing the cruise control method may further include an input device 603 and an output device 604. The processor 601, the memory 602, the input device 603, and the output device 604 may be connected via a bus as illustrated in FIG. 6 or other manners.

The input device 603 may receive input number or character information, and generate key signal input related to user settings and functional control of an electronic device implementing a cruise control method, such as a touch screen, a keypad, a mouse, a track pad, a touch pad, a pointer bar, one or more mouse buttons, a track ball, a joystick, or the like. The output device 604 may include a display device, an auxiliary lighting device (e.g., an LED) and a tactile feedback device (e.g., a vibration motor) or the like. The display device may include, but is not limited to, a liquid crystal display (LCD), a light emitting diode (LED) display, and a plasma display. In some embodiments, the display device may be a touch screen.

The various embodiments of the systems and techniques described herein may be implemented in digital electronic circuit systems, integrated circuit systems, specific application ASICs, computer hardware, firmware, software, and/or combinations thereof. These various embodiments may include being implemented in one or more computer programs that may execute and/or interpret on a programmable system including at least one programmable processor, which may be a dedicated or general purpose programmable processor, that may receive data and instructions from a memory system, at least one input device, and at least one output device, and transmit the data and instructions to the memory system, the at least one input device, and the at least one output device.

These computing programs (also referred to as programs, software, software applications, or code) include machine instructions of a programmable processor and may be implemented in high-level procedures and/or object-oriented programming languages, and/or assembly/machine languages. As used herein, the terms "machine-readable medium" and "computer-readable medium" refer to any computer program product, apparatus, and/or device (e.g., magnetic disk, optical disk, memory, programmable logic device (PLD)) for providing machine instructions and/or data to a programmable processor, including a machine-readable medium that receives machine instructions as machine-readable signals. The term "machine readable signal" refers to any signal used to provide machine instructions and/or data to a programmable processor.

To provide interaction with a user, the systems and techniques described herein may be implemented on a computer having a display device (e.g., a CRT (cathode ray tube) or LCD (liquid crystal display) monitor) for displaying information to the user; and a keyboard and a pointing device (e.g., a mouse or a trackball) through which a user may provide input to a computer. Other types of devices may also be used to provide interaction with a user; For example, the feedback provided to the user may be any form of sensory feedback (e.g., visual feedback, audio feedback, or tactile feedback); and input from the user may be received in any form, including acoustic input, speech input, or tactile input.

The systems and techniques described herein may be implemented in a computing system including a background component (e.g., as a data server), or a computing system including a middleware component (e.g., an application server), or a computing system including a front-end component (e.g., a user computer having a graphical user interface or a web browser through which a user may interact with embodiments of the systems and techniques described herein), or a computing system including any combination of such background component, middleware component, or front-end component. The components of the system may be interconnected by any form or medium of digital data communication (e.g., a communication network). Examples of communication networks include local area networks (LANs), wide area networks (WANs), the Internet, and block chain networks.

The computer system may include a client and a server. The client and server are typically remote from each other and typically interact through a communication network. The relationship between the client and the server is generated by a computer program running on the corresponding computer and having a client-server relationship with each other. The server may be a cloud server, also referred to as a cloud computing server or a cloud host, and is a host product in a cloud computing service system, so as to solve the defects of difficult management and weak service scalability existing in the conventional physical host and the VPS service.

According to the technical solution of the embodiment of the present disclosure, the determination of the target vehicle self-sensing data is performed through the association matching of the historical driving environment data, so that the determination of the pedal control information is performed based on the target driving state data associated with the target vehicle self-sensing data, and thus the cruise control of the target driving device further realized, so that the cruise control process may adapt to different driving environments and drivers, thereby improving the user experience. In addition, the auxiliary determination of the pedal control information is performed by means of historical data association determination, so that the amount of data calculation in the cruise control process may be reduced, thereby improving the cruise control efficiency.

An embodiment of the present disclosure further provides a vehicle in which an electronic device for implementing a cruise control method is provided.

It is to be understood that reordering, adding or deleting the steps thereof may be performed when using various forms of the above processing flow shown above. For example, the steps described in the present disclosure may be performed parallelly or sequentially or in a different order, so long as the desired results of the technical solution disclosed in the present disclosure may be realized, and no limitation is imposed herein.

The foregoing detailed description is not intended to limit the scope of the present disclosure. It will be appreciated by those skilled in the art that various modifications, combinations, sub-combinations, and substitutions may be made depending on design requirements and other factors. Any modifications, equivalents, and modifications within the spirit and principles of this application are intended to be included within the scope of this application.

**Claims**

1. A method for cruising control, comprising:

   determining (S101) vehicle self-sensing data and driving environment data during cruise of a target driving device;
   determining (S102), from historical vehicle self-sensing data associated with historical driving environment data of the target driving device, target vehicle self-sensing data matching with the vehicle self-sensing data; and
   determining (S103) pedal control information for cruising control of the target driving device, based on target driving state data associated with the target vehicle self-sensing data.

2. The method of claim 1, wherein the determining, from historical vehicle self-sensing data associated with historical driving environment data of the target driving device, target vehicle self-sensing data matching with the vehicle self-sensing data, comprises:

   determining (S202), from the historical driving environment data of the target driving device, target driving environment data matching with the driving environment data; and
   determining (S203), the target vehicle self-sensing data matching with the vehicle self-sensing data based on the historical vehicle self-sensing data associated with the target driving environment data.

3. The method of claim 2, wherein the association relationship of the historical driving environment data with the historical vehicle self-sensing data is constructed according to:

   clustering (S412), based on at least one driving environment field , the historical driving environment data to obtain a driving environment clustering result;
   clustering, based on at least one sensing field, the historical vehicle self-sensing data to obtain a sensing clustering result; and
   establishing an association relationship between the driving environment clustering result and respective the sensing clustering result, based on the time stamp information of the historical vehicle self-sensing data and the historical driving environment data.

4. The method of claim 2, wherein the association relationship of the historical driving environment data with the historical vehicle self-sensing data is constructed according to:

   clustering, based on at least one driving environment field, the historical driving environment data to obtain a driving environment clustering result;
   clustering, based on the at least one sensing field, historical vehicle self-sensing data of respective driving environment clustering category respectively to obtain a sensing clustering result; and
   establishing the association relationship between the driving environment clustering result and the sensing clustering result.

5. The method of any one of claims 1 to 4, wherein the association relationship of the historical vehicle self-sensing data with historical driving state data is constructed according to:

   clustering, based on at least one sensing field, the historical vehicle self-sensing data to obtain a sensing clustering result;
   clustering, based on at least one driving state field, the historical driving state data to obtain a driving state clustering result; and
   establishing the association relationship between the sensing clustering result and the driving state clustering result based on the time stamp information of the historical driving state data and the historical vehicle self-sensing data.

6. The method of any one of claims 3 to 5, wherein at least one of the sensing clustering result, the driving environment clustering result and the driving state clustering result is stored in a tree structure.

7. The method of any one of claim 2 to 6, wherein the determining pedal control information based on target driving state data associated with the target vehicle self-sensing data comprises:

> determining (S304) a driving state confidence degree based on a first distance of the driving environment data and the target driving environment data, and/or a second distance of the vehicle self-sensing data and the target vehicle self-sensing data; and
> determining (S305) the pedal control information based on the driving state confidence degree and target driving state data associated with the target vehicle self-sensing data.

8. The method of claim 7, wherein the method further comprises, after the determining the driving state confidence degree, and before determining the pedal control information based on the driving state confidence degree and target driving state data associated with the target vehicle self-sensing data, adjusting the driving state confidence degree in response to a field value of at least one driving state field in the target driving state data indicating a dangerous state.

9. An apparatus for cruising control, comprising: modules for performing the method according to any one of claims 1 to 8.

10. An electronic device, comprising:

> at least one processor; and
> a memory in communication connection with the at least one processor; wherein,
> the memory stores instructions executable by the at least one processor to cause the at least one processor to perform method of cruising control as claimed in any one of claims 1 to 8 when executed by the at least one processor .

11. A vehicle, wherein the vehicle comprises the electronic device of claim 10.

12. A non-transitory computer-readable storage medium storing computer instructions for causing a computer to perform the method for cruising control according to any one of claims 1 to 8.

13. A computer program comprising instructions which, when the program is executed by a computer, cause the computer to perform the method according to any one of claims 1 to 8.

S101

Determine vehicle self-sensing data and driving
environment data during cruise of a target
driving device

S102

Determine, from historical vehicle self-sensing data
associated with historical driving environment data
of the target driving device, the target vehicle
self-sensing data that matches the vehicle
self-sensing data

S103

Determine pedal control information based on the
target driving state data associated with the target
vehicle self-sensing data, for performing cruise
control of the target driving device

Fig. 1

S201

Determine vehicle self-sensing data and driving
environment data during cruise of the target
driving device

S202

Determine, from the historical driving environment
data of the target driving device, the target driving
environment data that matches the driving
environment data

S203

Determine, based on the historical vehicle
self-sensing data associated with the target driving
environment data, target vehicle self-sensing data
that matches the vehicle self-sensing data

S204

Determine pedal control information based on the
target driving state data associated with the target
vehicle self-sensing data, for performing a cruise
control of the target driving device

Fig. 2

S301

Determine vehicle self-sensing data and driving environment data during cruise of the target driving device

S302

Determine, from the historical driving environment data of the target driving device, target driving environment data that matches the driving environment data

S303

Determine, based on the historical vehicle self-sensing data associated with the target driving environment data, target vehicle self-sensing data that matches the vehicle self-sensing data

S304

Determine a driving state confidence degree based on the first distance of the driving environment data and the target driving environment data, and/or the second distance of the vehicle self-sensing data and the target vehicle self-sensing data

S305

Determine the pedal control information based on the driving state confidence degree and the target driving state data associated with the target vehicle self-sensing data, for performing a cruise control of the target driving device

Fig. 3

S411

Acquire historical vehicle self-sensing data, historical driving environment data, and historical driving state data corresponding to respective time stamp information of the target vehicle in the historical use phase

S412

Cluster the historical vehicle self-sensing data, the historical driving environment data and the historical driving state data respectively, to obtain at least one sensing tree model, driving environment tree model, and driving state data tree model

S410

S413

Construct, based on the time stamp information, a first association relationship between respective leaf node in the driving environment tree model and the sensing tree model, and a second association relationship between respective leaf node in the sensing tree model and the driving state tree model

S421

Acquire vehicle self-sensing data and driving environment data in a target vehicle cruise control process

S422

determine, based on the similarity, the leaf node that matches the driving environment data in the driving environment tree model, as the target driving environment node

S423

Determine, based on the similarity, a leaf node that matches the vehicle self-sensing data from a sensing tree model having a first association relationship with a target driving environment node, as the target sensing node

S420

S424

Determine the target driving state data based on the historical driving state data in the driving state tree model having the second association relationship with the target sensing node

S431

Determine a first distance between the driving environment data and the target driving environment node, and a second distance between the vehicle self-sensing data and the target sensing node

S432

Determine a driving state confidence degree based on the first distance and the second distance

S433

Determine weighting weights of the target driving state data and the standard driving state data respectively, based on the driving state confidence degree

S430

S434

determine final driving state data based on a weighted sum of the target driving state data and the standard driving state data

S435

Determine pedal control information based on the final driving state data, for cruise control of the target vehicle

Fig. 4A

Driving environment field

Vehicle's own speed

Following vehicle's speed

Fig. 4B

Fig. 4C

the cruise control apparatus 500

vehicle self-sensing data determining module 501

target vehicle self-sensing data determining module 502

pedal control information determining module 503

Fig. 5

memory —602

bus

input device —603

processor —601

output device —604

Fig. 6